# EUROPÄISCHE PATENTANMELDUNG

(11) **EP 2 144 456 A1**
(43) Veröffentlichungstag der Anmeldung: **13.01.2010**
(21) Anmeldenummer: 09157698.3
(22) Anmeldetag: 09.04.2009
(51) Int. Cl.: H04R 25/00, H01M 2/10

(54) **Hörhilfe mit verriegelbarem Batteriefach**

(30) Priorität: 10.07.2008 DE 102008032478
(71) Anmelder: Siemens Medical Instruments Pte. Ltd., Singapore 139959 (SG)
(72) Erfinder: Koo, Wee Haw, 680294, Singapore (SG)
(74) Vertreter: Maier, Daniel Oliver

(57) **Zusammenfassung**

Die Erfindung betrifft eine verriegelbare Batteriefachabdeckung (2) für eine Hörhilfe (3) sowie eine Hörhilfe (3) mit einem verriegelbaren Batteriefach (6). Die Hörhilfe (3) weist ein Gehäuse (1) auf, das eine Abdeckung (2) umfasst. Die Abdeckung kann durch eine mit dem Gehäuse (1) in gegenseitigen Eingriff bringbare Verriegelung an dem Gehäuse (1) lösbar angebracht werden. Das Gehäuse (1) weist zwei innenliegende Vertiefungen (12) auf, die in zueinander entgegengesetzter Richtung erstreckt sind. Die Verriegelung umfasst zwei Riegel (11), die in zueinander entgegengesetzter Richtung erstreckt sind, und die eine Schließposition einnehmen können, in der jeder Riegel (11) mit jeweils einer Vertiefung (12) in gegenseitigem Eingriff steht. Die Riegel (11) können weiter in einer Öffnenposition stehen, in der sie nicht mit den Vertiefungen (12) in gegenseitigem Eingriff stehen können. Gemäß der Erfindung umfasst die Verriegelung ein Betätigungselement (10), das mit den Riegeln (11) in Wechselwirkung steht, so dass die Riegel (11) bei nicht betätigtem Betätigungselement (10) selbstätig die Schließposition einnehmen und durch Betätigen des Betätigungselements (10) in einer einander entgegengesetzten Bewegung in die Öffnenposition gebracht werden. Das Betätigungselement (10) und die Riegel (11) können als einstückiges Bauelement ausgeführt sein, gegebenenfalls einschließlich der Abdeckung (2), und aus Kunststoff bestehen.

## Beschreibung

Die Erfindung betrifft eine verriegelbare Batteriefachabdeckung für eine Hörhilfe sowie eine Hörhilfe mit einem verriegelbaren Batteriefach.

Hörhilfen sind im allgemeinen tragbar ausgeführt und weisen deshalb eine Batterie als Energiequelle zur Spannungsversorgung auf. Die Batterie hat eine verhältnismäßig geringe Lebensdauer und muss deshalb häufig durch den Hörhilfeträger gewechselt werden. Zu diesem Zweck ist in einem Hörhilfegehäuse ein mit einer Abdeckung versehenes, leicht zugängliches Batteriefach vorgesehen. Die leichte Zugänglichkeit ist insbesondere für ältere Hörhilfeträger mit verminderten feinmotorischen und taktilen Fähigkeiten wünschenswert.

Hörhilfen dienen der Versorgung von hörgeschädigten Personen, z.B. Schwerhörigen, mit individuell angepasst verstärkten Hörsignalen. Meist können Hörhilfen zudem in unterschiedlichen, situationsangepassten Signalverarbeitungsalgorithmen, sogenannten Hörprogrammen, arbeiten und sind deshalb programmierbar. Zur Programmierung von Hörprogrammen und Betriebsparametern ist an einer Hörhilfe eine Hardware-Programmierschnittstelle vorgesehen, z.B. die heute als Quasi-Standard übliche CS44-Steckverbindung. Als Schutz gegen Verschmutzung, Feuchtigkeit und ungewünschte Berührung der Kontakte ist die Programmierschnittstelle häufig mit einer Abdeckung verschließbar.

Häufig weisen Hörhilfen weitere Hardware-Schnittstellen zum Anschluss von Zubehörgeräten auf, z.B. zum Anschluss eines sogenannten Audio-Schuhs. Auch diese weiteren Schnittstellen können mit einer Abdeckung versehen sein.

Für hörgeschädigte Personen können außer Hörhilfen auch Tinnitus-Therapiegeräte, z.B. sogenannte Tinnitus-Masker, zum Einsatz kommen. Dabei handelt es sich um in der Bauform den Hörhilfen ähnliche oder identische Geräte. Ihr Zweck ist jedoch nicht oder nicht allein eine geeignete Hörsignal-Verstärkung, sondern die Erzeugung von bestimmten akustischen Signalen, die der Überdeckung oder Abschwächung von Tinnitus-Störgeräuschen dienen. Im folgenden wird der Begriff Hörhilfe gleichermaßen für Hörhilfen sowie für Tinnitus-Therapiegeräte verwendet.

Für die Abdeckung von Batteriefächern, Hardware-Schnittstellen und weiteren Öffnungen in Hörhilfegehäusen sind unterschiedliche Ausführungsformen vorbekannt. Neben dem Ziel einfacher Handhabbarkeit wird dabei beispielsweise auch ein Schutz gegen ungewolltes Öffnen der jeweiligen Abdeckung angestrebt, insbesondere gegen ungewolltes Öffnen des Batteriefachs durch Kleinkinder. Einzelne Ausführungsformen dienen auch einer zusätzlichen Vereinfachung der Gesamtkonstruktion der Hörhilfe durch Integration weiterer Funktionalitäten in die Abdeckung, z.B. Integration des Ein-und Ausschalters.

Aus der Druckschrift DE 29 916 350 U1 ist ein Hörhilfegerät bekannt mit einer Batterielade, die zum Herausnehmen der Batterie betätigbar ist. Die Batterielade dienst zusätzlich als Schaltmittel, um das Hörhilfegerät aus- und einzuschalten. Sie ist durch ein verschiebbares Sperrelement sperrbar, das in einer ersten Stellung die Betätigung der Batterielade als Schaltmittel freigibt und zum Herausnehmen der Batterie blockiert. In einer zweiten Stellung des Sperrelements wird auch die Betätigung der Batterielade zum Herausnehmen der Batterie freigegeben.

Aus der Druckschrift WO 2007/024194 A1 ist ein Hörhilfegerät mit einer Batterielade bekannt, die eine Batteriefachabdeckung umfasst. Die Batterielade dient zum Einlegen einer Batterie und stellt, sobald sie geschlossen wird, die elektrische Verbindung zwischen Batterie und Hörhilfegerät her. Sie weist ein verschiebbares Sperrelement auf, mittels dessen sie im Gehäuse des Hörhilfegeräts verriegelt und entriegelt werden kann.

Aus der Druckschrift EP 1 874 091 A2 ist ebenfalls eine Batterielade für ein Hörhilfegerät bekannt, die zum Einlegen einer Batterie und dem Herstellen einer elektrischen Verbindung mit dem Hörhilfegerät dient. Die Batterielade rastet mit einer Rastnase in das Gehäuse des Hörhilfegeräts ein, wenn sie geschlossen wird. Zusätzlich wird die geschlossene Stellung durch das Magnetfeld eines Permantentmagneten unterstützt.

Aus der DE 697 11 389 T2 ist eine einschnappbare Verriegelung für das Batteriefach eines Mobiltelefons bekannt. Die Verriegelung wird durch Drücken betätigt, wobei das Entriegeln und das Öffnen des Batteriefachs durch Betätigung in gleicher oder ähnlicher Betätigungsrichtung bewirkt werden. Dadurch wird das Öffnen durch eine einfach ausführbare Betätigungsbewegung ermöglicht.

Das Ziel der Erfindung besteht darin, ein Hörhilfegehäuse mit einer verriegelbaren Abdeckung sowie eine verriegelbare Abdeckung für ein Hörhilfgehäuse anzugeben, die einfach bedienbar ist, zuverlässig in der Funktion, und unaufwändig in Konstruktion und Herstellung.

Die Erfindung löst diese Aufgabe durch eine Hörhilfe sowie durch eine Abdeckung mit den Merkmalen der unabhängigen Patentansprüche.

Ein Grundgedanke der Erfindung besteht in einer Hörhilfe mit einem Gehäuse, das eine Abdeckung umfasst, die durch eine mit dem Gehäuse in gegenseitigen Eingriff bringbare Verriegelung an dem Gehäuse lösbar angebracht werden kann, wobei
- das Gehäuse zwei innenliegende Vertiefungen aufweist, die in zueinander entgegengesetzter Richtung erstreckt sind,
- die Verriegelung zwei Riegel umfasst, die in zueinander entgegengesetzter Richtung erstreckt sind,
- die Riegel eine Schließposition einnehmen können, in der jeder Riegel mit jeweils einer Vertiefung in gegenseitigem Eingriff stehen kann, und eine Öffnenposition, in der die Riegel nicht mit den Vertiefungen in gegenseitigem Eingriff stehen können,
- die Verriegelung ein Betätigungselement umfasst, das mit den Riegeln in Wechselwirkung steht,
- und die Riegel bei nicht betätigtem Betätigungselement selbstätig die Schließposition einnehmen und durch Betätigen des Betätigungselements in einer einander entgegengesetzten Bewegung in die Öffnenposition gebracht werden.

Dadurch, dass ein gemeinsames Betätigungselement zur gemeinsamen Betätigung der Riegel vorgesehen ist, vereinfacht sich die Bedienung der Verriegelung. Es brauchen nämlich nicht mehrere Verriegelungselemente gleichzeitig betätigt und miteinander koordiniert bedient zu werden. Zudem ist die Betätigung der Verriegelung von der Öffen- und SchließBewegung der Abdeckung unabhängig. Dies erleichtet die Bedienung der Verriegelung zusätzlich. Durch die erleichterte Bedienbarkeit erfordert das Öffnen eine verringerte Konzentration des Hörhilfeträgers, so dass die Vorraussetzungen dafür geschaffen sind, höhere Verriegelungskräfte vorzusehen. Dies erhöht die Sicherheit der Verriegelung gegen ungewolltes Öffnen und gegen unbeabsichtigte Betätigung beispielsweise durch Kleinkinder.

Das Betätigungselement kann vorteilhafterweise als Drucktaste ausgeführt sein. Beliebige andere Ausführungsformen, beispielsweise als Hebel, Schieber oder Wipptaste sind ebenfalls vorstellbar.

Zusätzlich ist die Konstruktion der Verriegelung aufgrund der geringen Anzahl von Konstruktionselementen verhältnismäßig einfach gehalten. Dies verringert weiter auch die Anzahl der Montageschritte und damit den Herstellungsaufwand.

In einer vorteilhaften Weiterbildung der Erfindung sind die Riegel als Stifte ausgeführt. Dies ermöglicht eine besonders einfache Konstruktion und besonders unaufwändige Herstellung. Insbesondere können besonders einfache Stift-Formen, z.B. zylindrisch, gewählt werden.

In einer weiteren vorteilhaften Weiterbildung der Erfindung sind die Vertiefungen im Gehäuse der Hörhilfe als Bohrungen ausgeführt. Dies ermöglicht eine besonders einfache Konstrkution und unaufwändige Herstellung bei gleichzeitiger Anpassung an die Ausführung, falls die Riegel als Stifte ausgeführt sind. Insbesondere stellen kreisrunde Bohrungen eine besonders einfache Form der Vertiefungen dar, die an eine zylindrische Riegelform angepasst sind.

In einer weiteren vorteilhaften Weiterbildung der Erfindung sind die Riegel und das Betätigungselement als einstückiges Bauelement ausgeführt. Dies verringert die Anzahl der Montageschritte bei der Herstellung und damit den Herstellungsaufwand. Zudem vereinfacht eine Verringerung der Anzahl von miteinander wechselwirkenden Teilen die Konstruktion. Und nicht zuletzt kann durch eine Verringerung der Anzahl wechselwirkender Teile eine Erhöhung der Zuverlässigkeit erreicht werden.

In einer weiteren vorteilhaften Weiterbildung der Erfindung sind die Riegel, das Betätigungselement und zusätzlich auch die Abdeckung als einstückiges Bauelement ausgeführt. Dadurch ergibt sich eine weitere Reduzierung der Teilezahl und somit eine weitere Verringerung des Fertigungsaufwandes.

In einer weiteren vorteilhaften Weiterbildung der Erfindung ist das mindestens aus Riegeln und Betätigungselement bestehende Bauelement teilweise elastisch ausgeführt. Die elastischen Kräfte können dabei bewirken, dass die Riegel der Verriegelung selbstätig die Schließposition einnehmen und nur gegen die elastischen Kräfte in die Öffenposition gehen. Damit ist durch die Ausnutzung der elastischen Kräfte sichergestellt, dass die Riegel bei nicht betätigtem Betätigungselement in Schließposition sind. Durch die Konstruktion des Bauelements und damit wechselwirkender Teile der Abdeckung oder des Hörhilfegehäuses können die Betätigungskräfte bei Betätigung des Betätigungselements derart geleitet werden, dass durch sie die Riegel in Öffenposition gebracht werden. Durch die elastische Ausführung des Bauelements werden zusätzliche Konstruktionselemente überflüssig, z.B. Federn oder Permanentmagneten zum Aufbringen elastischer oder reversibler Schließ-Kräfte. Die Verringerung der Teilzahl bewirkt eine Verringerung der Montageschritte bei der Herstellung und damit den Herstellungsaufwand und kann die Zuverlässigketi der Konstruktion erhöhen.

In einer weiteren vorteilhaften Weiterbildung der Erfindung bestehen die Riegel und das Betätigungselement aus Kunststoff. Aus Kunststoff können beispielsweise in Spritzguss-Verfahren oder RSM-Verfahren vorteilhaft 3-dimensionale Bauteileformen realisiert werden.

In einer weiteren vorteilhaften Weiterbildung der Erfindung ist eine Batterielade zum Einlegen einer Batterie vorgesehen, die derart ausgebildet ist, dass sie in ein Batteriefach des Hörhilfegehäuses eingebracht werden kann, und die Abdeckung ist als deren Bestandteil von der Batterielade umfasst. Dadurch lässt sich eine vollständige, vom Hörhilfegehäuse separate Bauelementeinheit aus Abdeckung, Verriegelung und Batterielade als separates Bauelement herstellen und montieren. Der solcherart separate Aufbau der Batterielade bringt alle Vorteile eines modularen Bauelementekonzeptes mit sich, z.B. gute Austauschbarkeit, unabhängige Bauelement-Entwicklung und -Verbesserung, effiziente Bauelement- und Ersatzteil-Logistik.

Weitere vorteilhafte Weiterbildungen der Erfindung ergeben sich aus den abhängigen Patentansprüchen und der nachfolgenden Beschreibung von Ausführungsbeispielen anhand von Figuren. Es zeigen:
- FIG 1: Gehäuseabschnitt mit geschlossener Abdeckung
- FIG 2: Gehäuseabschnitt mit geöffneter Abdeckung
- FIG 3: Abdeckung mit Riegel und Betätigungselement
- FIG 4: Hörhilfe mit Abdeckung und Betätigungselement
- FIG 5: Ausführungsvariante der Verriegelung

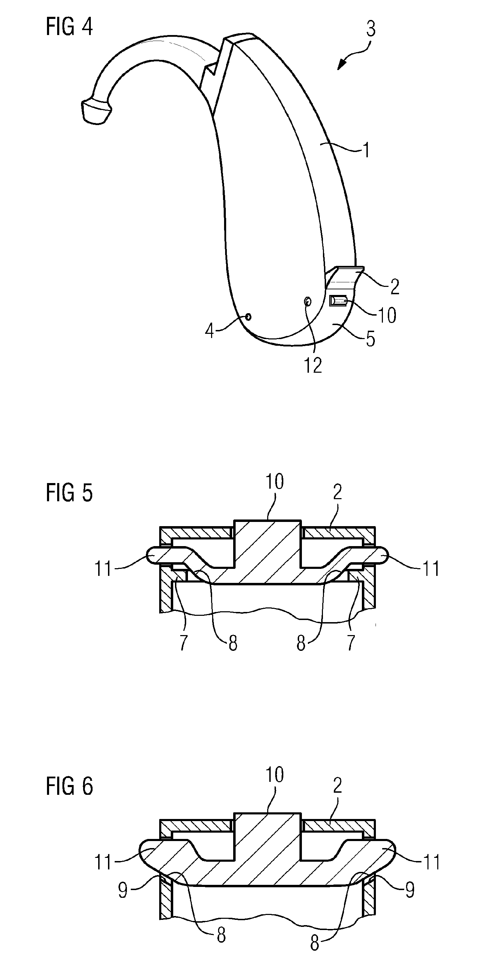

- FIG 5: Weitere Ausführungsvariante der Verriegelung

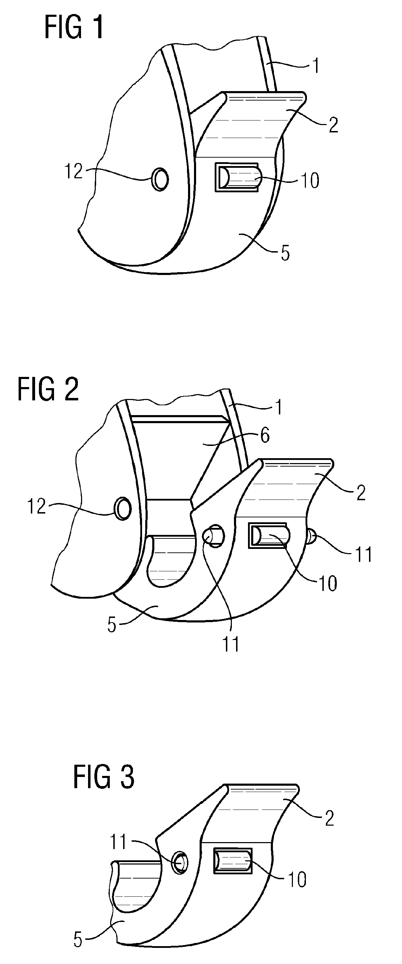

**Figur 1** ist ein Abschnitt eines Gehäuses 1 einer Hörhilfe 3 mit einer Abdeckung 2 schematisch dargestellt. Die Abdeckung 2 schließt mit der Randung des Gehäuses 1 größtenteils bündig ab. Sie ist Bestandteil einer Batterie 5.

Die Batterielade 5 ist so ausgeformt, dass eine in der Abbildung nicht dargestellte Batterie eingelegt werden kann. Die Batterie kann beispielsweise der Spannungsversorgung für die ebenfalls nicht dargestellte Signalverarbeitungselektronik der Hörhilfe dienen. Bei geschlossener Abdeckung 2, wie in der Abbildung dargestellt, ist die Batterielade 5 in ein Batteriefach des Gehäuses 1 eingeschoben und die Hörhilfe somit mit einer in die Batterielade 5 eingelegten Batterie verbunden. Dargestellt ist also der betriebsbereite Zustand.

Die Abdeckung 2 und die Batterielade 5 bilden ein gemeinsames Bauelement. An der Abdeckung 2 sind Bauelemente einer Verriegelung vorgesehen. Die Verriegelung dient dazu, die Abdeckung 2, und somit auch die Batterielade 5, an bzw. in dem Gehäuse 1 lösbar zu befestigen.

Bei geschlossener Abdeckung 2 ist als einziges Verriegelungselement der Abdeckung ein Betätigungselement 10 zu sehen. Beim Betätigungselement 10 handelt es sich um ein aus der Abbildung herausragendes Tast- bzw. Druck-Element.

Durch Betätigung des Betätigungselements 10, nämlich Drücken, wird die Verriegelung geöffnet und die Abdeckung kann gelöst werden.

Auf Seiten des Gehäuses 1 weist die Verriegelung eine angedeutet dargestellte Vertiefung 12 auf, die vor allem eine Vertiefung der Innenseite des Gehäuses 1 bzw. der Gehäusewand darstellt. Sie kann, wie in der Abbildung, als Bohrung oder Loch durch die Gehäusewand hindurchgehen. Die Vertiefung 12 kann jedoch auch lediglich an der Innenwand des Gehäuses 1 ausgebildet sein, so dass sie von außen nicht sichtbar zu sein braucht.

Die in der gewählten Perspektive vom Betrachtungsblickwinkel abgewandte Seite des Gehäuses 1 weist ebenfalls eine an gleicher Stelle, also symmetrisch, angeordnete Vertiefung 12 auf. Vom Innern des Gehäuses 1 betrachtet erstrecken sich die Vertiefungen 12 somit in einander entgegen gesetzter Richtung, nämlich jeweils nach außen. Im geschlossenen Zustand der Abdeckung 2 nicht sichtbar sind zwei mit der Abdeckung 2 verbundene und mit dem Betätigungselement 10 wechsel wirkende Riegel. Diese beiden Riegel sind so angeordnet, dass sie bei geschlossener Abdeckung 2 jeweils in eine der Vertiefungen 12 eingreifen können. Die Riegel erstrecken sich somit ebenfalls in einander entgegen gesetzte Richtungen.

Durch Drücken des Betätigungselements 10 werden die Riegel aus der Schließposition, in der sie mit den jeweiligen Vertiefungen 12 in Eingriff stehen, in einer einander entgegengesetzten, gegenläufigen Bewegung heraus bewegt. Sie nehmen dann eine Öffnen-Position ein, in der sie mit den Vertiefungen 12 nicht in Eingriff stehen, so dass die Verriegelung geöffnet und die Abdeckung 2 gelöst werden kann. Somit bewirkt die Verriegelung eine lösbare Befestigung der Abdeckung 2 im Gehäuse 1.

In **Figur 2** sind das vorangehend beschriebene Gehäuse 1 und die Abdeckung 2 in geöffnetem Zustand dargestellt. Die zur Batterielade 5 gehörende Abdeckung 2 ist aus dem Gehäuse 1 herausgeschoben bzw. herausgeschwenkt. Dadurch steht das Batteriefach 6 offen, in das die Batterielade 5 hineingeschoben wird, wenn die Abdeckung 2 geschlossen wird.

Obwohl das Betätigungselement 10 zum Öffnen der Abdeckung 2, während des Öffnen-Vorgangs, gedrückt sein muss, ist es in der Abbildung bereits wieder in nicht betätigtem Zustand dargestellt. Dies ist daran erkennbar, dass das Betätigungselement 10 aus der Abdeckung 2 ebenso weit herausragt wie in der vorangehend beschriebenen Figur.

Die geöffnete Abdeckung 2 macht die Riegel 11 der Verriegelung sichtbar. Sie stehen seitlich aus der Abdeckung 2 bzw. Batterielade 5 heraus. Derart können sie in die Vertiefungen 12 des Gehäuses eingreifen und stehen somit in Schließposition. Die Schließposition ist ihre Normal-Position bei nicht betätigtem Betätigungselement 10. Die Riegel 11 werden durch eine elastische bzw. Federkraft in die dargestellte Schließposition bewegt.

Aus der Darstellung wird ersichtlich, dass die Bewegung bei Betätigung des Betätigungselements von der Bewegung zum Öffnen der Abdeckung 2 unabhängig ist, in der dargestellten Ausführungsform sogar gegenläufig. Durch die gegenläufigen Bewegungen, die zum Öffnen der Abdeckung 2 erforderlich sind, wird die Wahrscheinlichkeit eines ungewollten oder unbeabsichtigten Öffnens verringert. Insbesondere wird dadurch die Gefahr eines versehentlichen Öffnens durch Kleinkinder, was wiederum das Risiko eines Verschluckens der Batterie mit sich bringt, verringert.

**Figur 3** ist ein Abschnitt lediglich der vorangehend beschriebenen Abdeckung 2 sowie Batterielade 5 dargestellt. Im Unterschied zur vorangehenden Darstellung ist jedoch das Betätigungselement 10 hineingedrückt. Dadurch befinden sich die Riegel 11 in ihrer Öffnen-Position, in der sie nicht mit den vorangehend beschriebenen Vertiefungen 12 in Eingriff stehen können. Aus der Darstellung wird somit ersichtlich, wie die Verriegelung durch Drücken des Betätigungselements 10 gelöst wird. Durch Drücken des Betätigungselements 10 wird die elastische bzw. Federkraft überwunden, die die Riegel 11 ansonsten in Schließposition hält. Diese Kraft kann vorteilhafterweise eine Größe von mehr als 20 N haben, um eine zuverlässige Sperrwirkung zu erzielen. Die Form der Riegel 11 ist so gewählt, nämlich mit gerundeten Köpfen, dass ein Schließen der Abdeckung 2 auch ohne Betätigung des Betätigungselements 10 möglich ist. Durch die abgerundete Form werden die Riegel 11 dabei von der Wand des Gehäuses 1 automatisch in ihre Öffnen-Position in die Abdeckung 2 hineingedrückt. Insofern bildet die Kraft, die die Riegel 11 in Schließposition drückt, einen Kompromiss zwischen dem Bestreben, eine möglichst sichere Sperrwirkung zu erzielen, und dem Interesse an einer bequemen Bedienbarkeit.

In **Figur 4** ist eine Hörhilfe 3 schematisch dargestellt. Es handelt sich um eine sog. Hinter-dem-Ohr (HdO)-Hörhilfe, erkennbar am hakenförmig ausgebildeten Schallkanal. Die Hörhilfe 3 umfasst das vorangehend beschriebene Gehäuse 1 mit Abdeckung 2 bzw. Batterielade 5. Erkennbar sind die vorangehend beschriebenen Elemente der Verriegelung, das Betätigungselement 10 sowie die der Betrachtungsseite zugewandte Vertiefung 12. Zusätzlich erkennbar ist eine Achsaufnahme 4, in der die Batterielade 5 schwenkbar gelagert ist. Zum Öffnen wird demnach das Betätigungselement 10 gedrückt und die Abdeckung 2 an ihrem hervorstehenden, mit dem Gehäuse 1 nicht bündig abschließenden Teil um die Achsaufnahme 4 herum geschwenkt.

In **Figur 5** sind die Riegel 11 und das Betätigungselement 10 schematisch dargestellt. Dargestellt ist genauer gesagt eine Ausführungsform, in der die Riegel 11 und das Betätigungselement 10 vorteilhafterweise einstückig ausgebildet sind. Sie befinden sich in einem als Schnitt dargestellten Abschnitt der Abdeckung 2.

Dargestellt ist die Schließposition, in der das Betätigungselement 10 nicht gedrückt ist und die Riegel 11 aus der Abdeckung 2 seitlich heraus stehen.

Die Riegel 11 sind mit dem Betätigungselement 10 über schräg laufende Arme verbunden, die an ihrer in der Abbildung unten dargestellten Seite Gleitflächen 8 aufweisen. Durch Drücken des Betätigungselements 10 werden die Gleitflächen 8 an der Innenseite der Abdeckung 2 vorgesehene Noppen 7 angedrückt. Wird das Betätigungselement 10 noch weiter hineingedrückt, werden daher die Riegel 11 aufgrund der gewählten schrägen Ausbildung der Arme bzw. Gleitflächen 8 durch die Noppen 7 in das Innere der Abdeckung 2 hineingezogen. Das aus Betätigungselement 10 und Riegel 11 gebildete einstückige Bauelement ist dabei, zumindest in den schräg angeordneten Armen, elastisch ausgeführt, so dass es bei nicht betätigtem Betätigungselement 10 wieder die dargestellte Konstellation einnimmt. Durch die Form bzw. den Winkel der Gleitflächen 8, die dabei in entgegen gesetzter Richtung über die Noppen 7 gleiten, wird dabei das Betätigungselement 10 selbsttätig wieder aus der Abdeckung 2 heraus gedrückt.

In **Figur 6** ist eine weitere Variante des Bauelements aus Betätigungselement 10 und Riegeln 11 dargestellt. Die Riegel 11 befinden sich in Schließposition, also aus dem im Schnitt dargestellten Abschnitt der Abdeckung 2 herausragend. Das Bauelement weist im Bereich der Verbindung zwischen jeweiligem Riegel 11 und dem Betätigungselement 10 eine abgewandelte Form auf, wesentlich daran ist die leicht geänderte Form der schräg angeordneten Gleitflächen 8. Diese sind so geformt, dass sie auf in der Wand der Abdeckung 2 ausgebildeten Gleitlagern 9 gleiten können. Dazu sind im Wesentlichen die Gleitlager 9 in einem vergleichbaren Winkel schräg ausgeformt. Aus der Darstellung wird erkennbar, dass durch Drücken des Betätigungselements die Gleitflächen 8 auf den Gleitlagern 9 derart gleiten, dass dabei die Riegel 11 in die Abdeckung 2 hineingezogen werden.

Wie in der vorangehend beschriebenen Variante ist das Bauelement elastisch ausgeführt, und zwar zumindest im Bereich der jeweiligen Verbindung zwischen Riegel 11 und Betätigungselement 10. Durch die elastischen Kräfte wird das Betätigungselement 10 nach dem Betätigen wieder aus der Abdeckung 2 herausgedrückt, ebenso wie die Riegel 11 dadurch wieder auf Öffnen-Position in der Abdeckung 2 in die Schließposition bewegt werden, in der sie seitlich herausstehen.

Weitere Ausführungsvarianten, in denen die Riegel als Stifte, beispielsweise aus Metall, ausgebildet sind, die durch die Kraft einer Feder in die Schließposition gedrückt werden, sind nicht näher dargestellt. Auch sind Ausführungsformen mit anderen Hörhilfetypen und anderen Abdeckungen als Batteriefach-Abdeckungen nicht näher dargestellt.

Die Erfindung lässt sich wie folgt zusammenfassen: Die Erfindung betrifft eine verriegelbare Batteriefachabdeckung 2 für eine Hörhilfe 3 sowie eine Hörhilfe 3 mit einem verriegelbaren Batteriefach 6. Die Hörhilfe 3 weist ein Gehäuse 1 auf, das eine Abdeckung 2 umfasst. Die Abdeckung kann durch eine mit dem Gehäuse 1 in gegenseitigen Eingriff bringbare Verriegelung an dem Gehäuse 1 lösbar angebracht werden. Das Gehäuse 1 weist zwei innenliegende Vertiefungen 12 auf, die in zueinander entgegengesetzter Richtung erstreckt sind. Die Verriegelung umfasst zwei Riegel 11, die in zueinander entgegengesetzter Richtung erstreckt sind, und die eine Schließposition einnehmen können, in der jeder Riegel 11 mit jeweils einer Vertiefung 12 in gegenseitigem Eingriff steht. Die Riegel 11 können weiter in einer Öffnenposition stehen, in der sie nicht mit den Vertiefungen 12 in gegenseitigem Eingriff stehen können. Gemäß der Erfindung umfasst die Verriegelung ein Betätigungselement 10, das mit den Riegeln 11 in Wechselwirkung steht, so dass die Riegel 11 bei nicht betätigtem Betätigungselement 10 selbstätig die Schließposition einnehmen und durch Betätigen des Betätigungselements 10 in einer einander entgegengesetzten Bewegung in die Öffnenposition gebracht werden. Das Betätigungselement 10 und die Riegel 11 können als einstückiges Bauelement ausgeführt sein, gegebenenfalls einschließlich der Abdeckung 2, und aus Kunststoff bestehen.

## Patentansprüche

1. Hörhilfe (3) mit einem Gehäuse (1), das eine Abdeckung (2) umfasst, die durch eine mit dem Gehäuse (1) in gegenseitigen Eingriff bringbare Verriegelung an dem Gehäuse (1) lösbar angebracht werden kann,
**dadurch gekennzeichnet, dass**
- das Gehäuse (1) zwei innenliegende Vertiefungen (12) aufweist, die in zueinander entgegengesetzter Richtung erstreckt sind,
- dass die Verriegelung zwei Riegel (11) umfasst, die in zueinander entgegengesetzter Richtung erstreckt sind,
- dass die Riegel (11) eine Schließposition einnehmen können, in der jeder Riegel (11) mit jeweils einer Vertiefung (12) in gegenseitigem Eingriff stehen kann, und eine Öffnenposition, in der die Riegel (11) nicht mit den Vertiefungen (12) in gegenseitigem Eingriff stehen können,
- dass die Verriegelung ein Betätigungselement (10) umfasst, das mit den Riegeln (11) in Wechselwirkung steht,
- und dass die Riegel (11) bei nicht betätigtem Betätigungselement (10) selbstätig die Schließposition einnehmen und durch Betätigen des Betätigungselements (10) in einer einander entgegengesetzten Bewegung in die Öffnenposition gebracht werden.

2. Hörhilfe (3) nach Anspruch 1,
**dadurch gekennzeichnet, dass**
die Riegel (11) als Stifte ausgeführt sind.

3. Hörhilfe (3) nach einem der vorhergehenden Ansprüche,
**dadurch gekennzeichnet, dass**
die Vertiefungen (12) als Bohrungen ausgeführt sind.

4. Hörhilfe (3) nach einem der vorhergehenden Ansprüche,
**dadurch gekennzeichnet, dass** die Riegel (11) und das Betätigungselement (10) als einstückiges Bauelement ausgeführt sind.

5. Hörhilfe (3) nach einem der vorhergehenden Ansprüche,
**dadurch gekennzeichnet, dass** die Riegel (11), das Betätigungselement (10) und die Abdeckung (2) als einstückiges Bauelement ausgeführt sind.

6. Hörhilfe (3) nach Anspruch 4 oder 5,
**dadurch gekennzeichnet, dass** das Bauelement zumindest teilweise elastisch ausgeführt ist, derart, dass die elastischen Kräfte die Riegel (11) in der Schließposition gehalten werden.

7. Hörhilfe (3) nach einem der vorhergehenden Ansprüche,
**dadurch gekennzeichnet, dass** die Riegel (11) und das Betätigungselement (10) aus Kunststoff bestehen.

8. Hörhilfe (3) nach einem der Ansprüche 1 bis 6,
**dadurch gekennzeichnet, dass** die Riegel (11) aus Metall bestehen und als Stifte ausgeführt sind.

9. Hörhilfe (3) nach einem der vorhergehenden Ansprüche,
**dadurch gekennzeichnet, dass** die Abdeckung (2) in dem Gehäuse (1) um eine Achse schwenkbar gelagert ist.

10. Hörhilfe (3) nach einem der vorhergehenden Ansprüche,
**dadurch gekennzeichnet, dass** die Abdeckung (2) derart ausgebildet ist, dass sie in an dem Gehäuse (1) angebrachter Position ein in dem Gehäuse (1) angeordnetes Batteriefach (6) abdeckt.

11. Hörhilfe (3) nach Anspruch 10,
**dadurch gekennzeichnet, dass** eine Batterielade (5) zum Einlegen einer Batterie vorgesehen ist, dass die Batterielade (5) derart ausgebildet ist, dass sie in das Batteriefach (6) eingebracht werden kann, und dass die Abdeckung (2) von der Batterielade (5) umfasst ist.

12. Abdeckung (2) für ein Gehäuse (1) einer Hörhilfe (3), die eine Verriegelung umfasst, durch die sie mit dem Gehäuse (1) in gegenseitigen Eingriff gebracht werden kann, um sie an dem Gehäuse (1) lösbar anzubringen,
**dadurch gekennzeichnet, dass**
- das Gehäuse (1) zwei innenliegende Vertiefungen (12) aufweist, die in zueinander entgegengesetzter Richtung erstreckt sind,
- dass die Verriegelung zwei Riegel (11) umfasst, die in zueinander entgegengesetzter Richtung erstreckt sind,
- dass die Riegel (11) eine Schließposition einnehmen können, in der jeder Riegel (11) mit jeweils einer Vertiefung (12) in gegenseitigem Eingriff stehen kann, und eine Öffnenposition, in der die Riegel (11) nicht mit den Vertiefungen (12) in gegenseitigem Eingriff stehen können,
- dass die Verriegelung ein Betätigungselement (10) umfasst, das mit den Riegeln (11) in Wechselwirkung steht,
- und dass die Riegel (11) bei nicht betätigtem Betätigungselement (10) selbstätig die Schließposition einnehmen und durch Betätigen des Betätigungselements (10) in einer einander entgegengesetzten Bewegung in die Öffnenposition gebracht werden.

13. Abdeckung (2) nach Anspruch 12,
**dadurch gekennzeichnet, dass** die Riegel (11) als Stifte ausgeführt sind.

14. Abdeckung (2) nach Anspruch 12 oder 13,
**dadurch gekennzeichnet, dass** die Vertiefungen (12) als Bohrungen ausgeführt sind.

15. Abdeckung (2) nach einem der Ansprüche 12 bis 14,
**dadurch gekennzeichnet, dass** die Riegel (11) und das Betätigungselement (10) als einstückiges Bauelement ausgeführt sind.

16. Abdeckung (2) nach einem der Ansprüche 12 bis 16,
**dadurch gekennzeichnet, dass** die Riegel (11), das Betätigungselement (10) und die Abdeckung (2) als einstückiges Bauelement ausgeführt sind.

17. Abdeckung (2) nach Anspruch 15 oder 16,
**dadurch gekennzeichnet, dass** das Bauelement zumindest teilweise elastisch ausgeführt ist, derart, dass die elastischen Kräfte die Riegel (11) in der Schließposition gehalten werden.

18. Abdeckung (2) nach einem der Ansprüche 12 bis 17,
**dadurch gekennzeichnet, dass** die Riegel (11) und das Betätigungselement (10) aus Kunststoff bestehen.

19. Abdeckung (2) nach einem der Ansprüche 12 bis 18,
**dadurch gekennzeichnet, dass** die Riegel (11) aus Metall bestehen und als Stifte ausgeführt sind.

20. Abdeckung (2) nach einem der Ansprüche 12 bis 19,
**dadurch gekennzeichnet, dass** die Abdeckung (2) in dem Gehäuse (1) um eine Achse schwenkbar lagerbar ist.

21. Abdeckung (2) nach einem der Ansprüche 12 bis 20,
**dadurch gekennzeichnet, dass** die Abdeckung (2) derart ausgebildet ist, dass sie in an dem Gehäuse (1) angebrachter Position ein in dem Gehäuse (1) angeordnetes Batteriefach (6) abdeckt.

22. Abdeckung (2) nach Anspruch 21,
**dadurch gekennzeichnet, dass** eine Batterielade (5) zum Einlegen einer Batterie vorgesehen ist, dass die Batterielade (5) derart ausgebildet ist, dass sie in das Batteriefach (6) eingebracht werden kann, und dass die Abdeckung (2) von der Batterielade (5) umfasst ist.
